# FASCICULE DE BREVET EUROPEEN

(11) **EP 2 983 888 B1**
(45) Date de publication et mention de la délivrance du brevet: **15.03.2017**
(21) Numéro de dépôt: 14722694.8
(22) Date de dépôt: 08.04.2014
(51) Int. Cl.: B29C 49/48, B29C 49/06, B29C 49/12, B29C 49/42, B29L 31/00

(54) **MOULE À PLAN DE JOINT DÉPORTÉ POUR LA FABRICATION DE RÉCIPIENTS À STABILITÉ ACCRUE**
FORM MIT EINER VERSETZTEN TRENNLINIE ZUR HERSTELLUNG VON BEHÄLTERN MIT ERHÖHTER STABILITÄT
MOLD HAVING AN OFFSET PARTING LINE FOR MANUFACTURING CONTAINERS HAVING INCREASED STABILITY

(30) Priorité: 12.04.2013 FR 1353351
(43) Date de publication de la demande: 17.02.2016
(73) Titulaire: Sidel Participations, 76930 Octeville Sur Mer (FR)
(72) Inventeur: PENET, Laurent, 76930 Octeville-sur-Mer (FR); PROTAIS, Pierrick, 76930 Octeville-sur-Mer (FR); BOUKOBZA, Michel, 76930 Octeville-sur-Mer (FR)
(74) Mandataire: Siloret, Patrick
(86) Numéro de dépôt international: PCT/FR2014/050834
(87) Numéro de publication internationale: WO 2014/167235

(56) Documents cités:
- JP-A- 2001 088 202
- JP-A- 2002 127 237
- JP-A- 2008 178 994
- JP-A- 2008 254 244
- US-A- 4 465 199
- US-A1- 2009 202 766

## Description

L'invention se rapporte à la fabrication des récipients, tels que bouteilles ou pots, obtenus par formage, et plus précisément par soufflage ou étirage soufflage, à partir d'ébauches en matière thermoplastique.

Pour fabriquer un récipient suivant la technique du soufflage, on commence par chauffer une ébauche (qu'il s'agisse d'une préforme ou d'un récipient intermédiaire ayant subi une première opération de soufflage à partir d'une préforme) à une température supérieure à la température de transition vitreuse de la matière constitutive de l'ébauche. On introduit ensuite l'ébauche dans un moule, puis on effectue le soufflage de l'ébauche en y injectant un fluide (tel que de l'air) sous haute pression (généralement supérieure à 26 bars).

La technique de l'étirage soufflage consiste, outre le soufflage, à étirer l'ébauche au moyen d'une tige coulissante, afin de minimiser le désaxement du récipient et d'uniformiser autant que possible la répartition de la matière.

Un récipient comporte une paroi latérale (également dénommée corps), un col qui s'étend à partir d'une extrémité supérieure du corps, et un fond qui s'étend à partir d'une extrémité inférieure du corps, à l'opposé du col. Le fond du récipient définit une assise, généralement à la jonction avec le corps, par laquelle le récipient peut reposer sur une surface plane (telle qu'une table).

Le moule comprend une paroi définissant une cavité destinée à conférer sa forme au corps du récipient. Cette cavité est fermée, à une extrémité inférieure, par un fond de moule destiné à conférer sa forme au fond du récipient.

L'un des buts principaux visés aujourd'hui par les fabricants de récipients est la diminution de la quantité de matière utilisée, ce qui se traduit par une réduction du poids des récipients. En contrepartie de cet allégement des récipients, on tente d'accroître leur rigidité au moyen d'artefacts liés soit au procédé de fabrication, soit au design, car la rigidité structurelle liée à la seule bi-orientation (orientation moléculaire axiale et radiale par rapport à l'axe central longitudinal du récipient) apparaît insuffisante. Il arrive même que certains cahiers des charges (notamment pour des applications de remplissage à chaud ou HR - "heat resistant" - en français "résistant à la chaleur") préconisent dans le même temps la réduction du poids et l'accroissement de la rigidité structurelle du récipient.

Dans les applications HR, la rigidité structurelle du récipient peut être accrue par voie thermique au moyen d'une thermofixation (en anglais "heat set") de la matière, consistant à maintenir le récipient en contact avec la paroi chauffée du moule, ce qui accroît le taux de cristallinité de la matière.

S'agissant plus particulièrement du fond du récipient, sa rigidité structurelle peut en outre être accrue (ou contrôlée) par voie mécanique au moyen d'un étirage local accru de la matière, au moyen d'un moule muni d'une paroi fixe constituant l'empreinte du corps du récipient, et d'un fond de moule constituant l'empreinte du fond du récipient, ce fond de moule étant monté mobile par rapport à la paroi. Le récipient est d'abord soufflé au-delà de sa forme finale, dans une position basse du fond de moule, puis le fond de moule est déplacé vers une position haute correspondant à la forme finale du récipient.

Cette technique, dénommée "boxage", illustrée dans la demande de brevet français FR 2 938 464 (SIDEL) ou son équivalent américain US 2012/031916, permet d'améliorer la tenue mécanique du fond du récipient, notamment au niveau de l'assise.

Des techniques apparentées sont décrites dans les documents JP2008-254244, US2009/0202766 et JP2001-088202.

Dans un tel moule, un interstice est prévu entre le fond de moule, monté sur un vérin de guidage, et la paroi, de façon à maintenir entre ces deux pièces un jeu fonctionnel ayant une double fonction : d'une part, permettre le déplacement sans coincement du fond de moule par rapport à la paroi ; d'autre part, former un évent de décompression permettant l'évacuation de l'air piégé entre le moule et le récipient au cours du soufflage.

Cette technique donne satisfaction mais demeure perfectible.

En effet, le jeu fonctionnel entre le moule et le fond de moule ne peut être inférieur à la précision de guidage du vérin, qui est de l'ordre de quelques dixièmes de millimètres pour une course de l'ordre d'une à quelques dizaines de millimètres (notamment de 20 à 30 mm).

En d'autres termes, ce jeu fonctionnel est du même ordre de grandeur que l'épaisseur de matière du récipient final. La matière a par conséquent tendance, lors du soufflage, à fluer dans l'interstice lorsque le fond de moule est en position basse. La matière ainsi pincée forme, lorsque le fond de moule est déplacé vers sa position haute, un mince bourrelet de matière qui persiste sur le récipient final. Ce bourrelet, formant une saillie sur l'assise du récipient, nuit à la stabilité de celui-ci.

Cet inconvénient est particulièrement notable sur les récipients plats, tels que les flacons, c'est-à-dire les récipients présentant en section une forme aplatie, typiquement ovale ou rectangulaire, destinés notamment aux produits cosmétiques qui présentent en général une viscosité élevée (une pression sur le corps de tels récipients favorisant alors l'écoulement de leur contenu), aux produits d'entretien domestique, ou à certaines boissons de sport ou alcoolisées (la section aplatie offrant alors une meilleure prise en main). En effet, l'instabilité naturelle de ces récipients, due à leur aplatissement qui accroît le risque de basculement dans un plan axial parallèle à leur petite largeur, est encore aggravée par la présence d'un bourrelet en saillie sur leur assise.

Une première solution peut consister à ébavurer le récipient, afin de retirer le bourrelet, par découpe ou par abrasion. Mais cette solution n'est pas réaliste à l'échelle industrielle, compte tenu des cadences de production (plusieurs dizaines de milliers de récipients par heure et par machine de soufflage).

Une deuxième solution peut consister à adjoindre au vérin un dispositif de guidage de précision (par exemple à billes), de façon à réduire le jeu fonctionnel entre le fond de moule et la paroi du moule. Mais cette solution se heurte à des difficultés pratiques, car l'encombrement du dispositif de guidage nécessiterait de modifier en profondeur l'architecture du moule, alors même que la place est comptée tout autour de celui-ci, compte tenu notamment de la présence de canalisations et branchements nécessaires à la circulation de fluides de régulation de température (chauffe et/ou refroidissement) dans la paroi du moule.

Une troisième solution peut consister à anticiper la commande de remontée du fond de moule, afin que la matière n'ait pas le temps de s'intercaler entre la paroi du moule et le fond de moule. Dans ces conditions toutefois, la matière destinée au fond du récipient est insuffisamment étirée, et l'assise se révèle mal formée, ce qui réduit l'intérêt du boxage.

En outre, la réduction du jeu fonctionnel entre le fond de moule et la paroi du moule est de nature à entraver l'évacuation de l'air présent dans le moule, avec un risque de malformation du récipient (à temps de cycle égal) ou d'augmentation du temps de cycle (à qualité du récipient égale).

Un objectif de l'invention est de proposer une technique de fabrication de récipients ayant une assise correctement formée et présentant à la fois une bonne rigidité et une bonne stabilité.

A cet effet, il est proposé, en premier lieu, un moule pour la fabrication, à partir d'une ébauche, d'un récipient ayant un corps et un fond dans le prolongement du corps à une extrémité inférieure du corps, le fond comprenant :
- une assise périphérique annulaire définissant un plan de pose qui s'étend sensiblement perpendiculairement au corps à partir d'une extrémité inférieure du corps, le plan de pose étant délimité intérieurement par un bord interne ;
- une voûte qui s'étend en creux vers l'intérieur du récipient à partir de l'assise,
ce moule comprenant :
- une paroi ayant une surface interne constituant l'empreinte du corps du récipient et délimitant une cavité, cette paroi étant percée, à une extrémité inférieure, d'une ouverture, la paroi présentant un rebord constituant l'empreinte du plan de pose, qui s'étend dans le prolongement de la surface interne, sensiblement perpendiculairement à celle-ci ;
- un fond de moule présentant une surface supérieure constituant l'empreinte d'au moins la voûte, et une jupe qui s'étend axialement à partir de la surface supérieure en regard de l'ouverture, le fond de moule étant monté mobile par rapport à la paroi entre une position sortie, dans laquelle la surface supérieure est écartée de l'ouverture vers l'extérieur de la cavité, et une position rentrée dans laquelle la surface supérieure obture la cavité, la jupe présentant une extension radiale externe strictement inférieure à une extension radiale interne du plan de pose, mesurée sur le bord interne.

Ces dispositions permettent de former sur le récipient une marche en creux dans laquelle se trouve localisée une éventuelle bavure résultant du fluage de matière entre le plan de joint entre la paroi du moule et le fond de moule. De la sorte, si une telle bavure est présente, alors elle ne dépasse pas du plan de pose et ne risque pas d'affecter la stabilité du récipient.

Diverses caractéristiques peuvent être prévues, seules ou en combinaison :
- le rebord se termine, vers l'intérieur, par une nervure annulaire bordant l'ouverture et formée en saillie vers l'intérieur de la cavité, cette nervure constituant l'empreinte d'une marche formée en creux dans l'assise du récipient ;
- la surface supérieure du fond de moule présente, à sa jonction avec la jupe, un bord externe qui, en position rentrée du fond de moule, s'étend au droit d'une face supérieure de la nervure ;
- la nervure présente une épaisseur, mesurée radialement, inférieure ou égale à la moitié d'une largeur du rebord ;
- la nervure présente une épaisseur, mesurée radialement, inférieure ou égale au tiers d'une largeur du rebord ;
- la nervure présente une épaisseur, mesurée radialement, inférieure ou égale au cinquième d'une largeur du rebord ;
- la nervure présente une épaisseur inférieure ou égale à 1 mm environ ;
- la nervure présente une épaisseur d'environ 0,5 mm ;
- la nervure présente une hauteur, mesurée axialement, inférieure ou égale à 1 mm ;
- la nervure présente une hauteur d'environ 0,5 mm.

Il est proposé, en deuxième lieu, un procédé de fabrication d'un récipient à partir d'une ébauche, ce procédé comprenant les opérations consistant à :
- introduire l'ébauche dans un moule tel que présenté ci-dessus, le fond de moule étant en position sortie,
- souffler le récipient en injectant dans l'ébauche un gaz sous pression,
- au cours du soufflage, déplacer le fond de moule vers sa position rentrée.

D'autres objets et avantages de l'invention apparaîtront à la lumière de la description d'un mode de réalisation, faite ci-après en référence aux dessins annexés dans lesquels :
- la figure 1 est une vue en coupe d'un moule pour la fabrication d'un récipient tel qu'illustré sur la figure 1, comprenant une paroi et un fond de moule mobile représenté dans une position basse ;
- la figure 2 est une vue en perspective par-dessous d'un récipient ;
- la figure 3 est une vue de détail du moule de la figure 1, selon l'encart II ;
- la figure 4 est une vue de détail similaire à la figure 3, dans laquelle le fond de moule est représenté dans une position haute, le récipient étant formé ;
- la figure 5 est une vue en coupe partielle du fond du récipient de la figure 1, avec, en encart, un détail à échelle agrandie centré sur la jonction entre l'assise et la voûte.

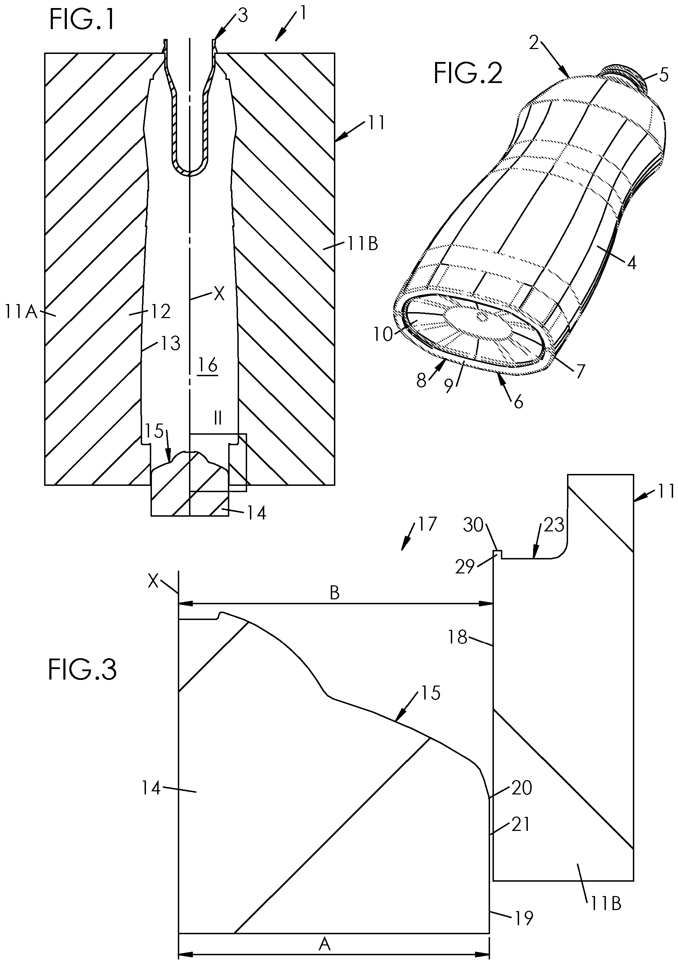

Sur les figures 1, 3 et 4 est partiellement représentée une unité **1** de formage d'un récipient **2** par étirage soufflage à partir d'une ébauche **3 -** en l'espèce une préforme - en matière plastique (tel que PET).

Le récipient **2** à former présente un corps **4** qui s'étend suivant un axe X principal, un col **5** qui prolonge le corps **4** à une extrémité supérieure de celui-ci, et un fond **6** qui ferme le corps **4** à une extrémité **7** inférieure de celui-ci, opposée au col **5**. Le fond **6** du récipient présente une assise **8** périphérique annulaire définissant un plan **9** de pose sensiblement perpendiculaire à l'axe X du récipient **2** et par lequel le récipient **2** est destiné à reposer sur une surface plane telle qu'une table. Le fond **6** présente une voûte **10** centrale qui prolonge l'assise **8** vers l'axe X du récipient **2** et s'étend en saillie vers l'intérieur de celui-ci.

Dans l'exemple illustré, le récipient est du type "flacon plat", et son corps **4** présente en section une forme aplatie, en l'espèce sensiblement ovale. Cette forme s'étend jusqu'au fond **6**, dont le contour est sensiblement le même que celui du corps **4** en section. Ce type de récipient est notamment destiné à des applications particulières, telles que cosmétiques, produits d'entretien domestique, ou encore boissons de sport ou alcoolisées, pour lesquelles la facilité de prise en main du récipient **2** est avantageuse.

L'unité **1** de formage comprend un moule **11**, ainsi que des moyens de soufflage (non représentés) incluant notamment une tuyère, des sources de gaz sous pression et des électrovannes qui, de manière classique, sont par exemple rassemblées dans un bloc surmontant la tuyère. L'unité **1** comporte une tige d'étirage, coulissant dans la tuyère.

Le moule **11** est par exemple du type portefeuille et comprend deux demi-moules **11A**, **11B** articulés autour d'une charnière, ces deux demi-moules s'ouvrant pour permettre, au début du cycle de formage, l'introduction d'une ébauche **3** préchauffée et, à la fin du cycle, l'évacuation du récipient **2** formé.

Comme cela est visible sur les figures, le moule **11** comprend une paroi **12** latérale définissant une surface **13** interne constituant l'empreinte du corps **4** du récipient **2**, et un fond **14** de moule ayant une surface **15** constituant l'empreinte d'une partie du fond **6**.

La surface **13** interne délimite une cavité **16** dans laquelle est introduite l'ébauche **3** et dans laquelle se déroule le formage. La surface **13** interne s'étend autour d'un axe central confondu avec l'axe X du récipient **2** à former.

Dans l'exemple illustré, où, nous l'avons vu, le récipient **2** n'est pas symétrique de révolution mais est aplati, il en va de même de la surface **13** interne, qui en section transversale (perpendiculairement à l'axe X) présente une forme ovale.

La paroi **12** latérale est percée, à une extrémité inférieure, d'une ouverture **17** qui se prolonge axialement par un alésage **18**.

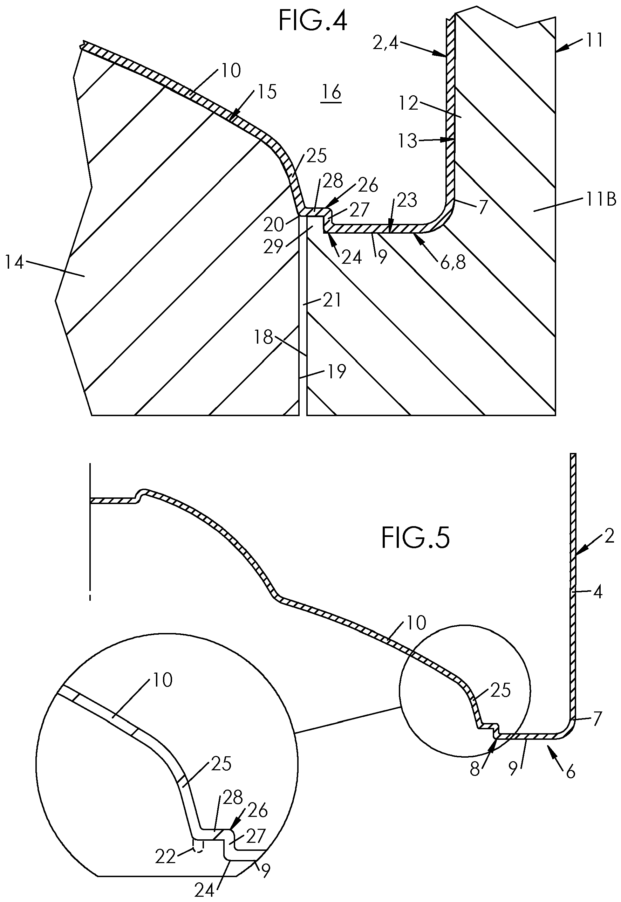

Le fond **14** de moule est monté déplaçable axialement par rapport à la paroi **12** entre une position sortie (figures 1 et 3), dans laquelle la surface **15** supérieure est écartée de l'ouverture **17** vers l'extérieur de la cavité **16**, et une position rentrée (figure 4), dans laquelle la surface **15** supérieure ferme la cavité **16** en obturant l'ouverture **17** pour compléter l'empreinte du récipient **2**.

La mobilité du fond **14** de moule vise à permettre, au cours du formage, un étirage local accru du fond **6** du récipient **2**, au cours d'une opération appelée boxage lors de laquelle le fond **14** de moule, initialement en position sortie, est déplacé vers sa position rentrée. A cet effet, le fond **14** de moule est par exemple monté sur un vérin pneumatique ou hydraulique (non représenté).

Dans la configuration illustrée sur les figures - donnée à titre d'exemple illustratif - où le récipient **2** est orienté col **5** en haut, la position sortie du fond **14** de moule correspond à une position basse, et sa position rentrée à une position haute.

Ainsi qu'illustré sur les figures 1, 3 et 4, le fond **14** de moule est pourvu d'une jupe **19**, de section complémentaire à celle de l'alésage **18** (en l'espèce ovale), qui s'étend axialement à partir d'un bord **20** externe de la surface **15** supérieure. Cette jupe **19** est logée dans l'alésage **18** avec un jeu **21** de quelques dixièmes de millimètres pour permettre le coulissement du fond **14** de moule de sa position basse à sa position haute, et réciproquement. Ce jeu **21** est, par généralisation de la terminologie usuelle du moulage, dénommé « plan de joint », bien que n'étant pas plan et présentant une certaine épaisseur.

L'épaisseur du plan **21** de joint est du même ordre de grandeur que l'épaisseur finale de matière constituant le récipient **2**. Il existe par conséquent un risque qu'à l'occasion du formage, un bourrelet de matière vienne se former par fluage dans le plan **21** de joint, de sorte qu'une bavure **22** (représentée en pointillés dans le cercle de détail de la figure 5) se forme sur le fond **6** du récipient **2**.

Le moule **11** est cependant conçu pour que cette éventuelle bavure **22** ne nuise pas à la stabilité du récipient **2**, surtout lorsque le récipient **2** est, comme dans l'exemple illustré, un flacon plat. Plus précisément, le moule **11** est conçu pour que l'éventuelle bavure **22** ne fasse pas saillie sur le plan **9** de pose, mais soit décalée, par rapport à celui-ci, vers l'intérieur du récipient **2**.

Comme on le voit sur les figures, et en particulier sur la figure 4 qui représente en détail une partie du fond **6** du récipient **2** en fin de formage, avec le fond **6** appliqué contre le moule **11**, l'empreinte du plan **9** de pose est intégralement formée dans la paroi **12**, et plus précisément par un rebord **23** de la paroi **12**, qui s'étend dans le prolongement de la surface **13** interne, sensiblement perpendiculairement à celle-ci.

Par ailleurs, la jupe **19** présente une extension radiale A externe strictement inférieure à une extension radiale interne B du plan **9** de pose, mesurée sur un bord **24** interne délimitant celui-ci vers l'intérieur.

De la sorte, le plan **21** de joint ne se trouve pas au droit du plan **9** de pose, mais est décalé vers l'axe X, et donc vers la voûte **10**.

Selon un mode de réalisation non représenté, le plan **21** de joint (et donc l'éventuelle bavure **22**) se trouve au droit de la voûte **10**, par exemple au droit d'une section **25** périphérique de la voûte **10**, de forme tronconique à faible angle au sommet (inférieur ou égal à 10°). Toutefois, dans ce cas la bavure **22**, qui s'étend axialement, est susceptible de déformer localement la section **25** périphérique de la voûte et, par conséquent, de nuire à la fonction de la voûte **10**, consistant à offrir une résistance mécanique à la pression hydrostatique exercée par le contenu du récipient **2**.

Selon un mode de réalisation préféré illustré sur les figures, et plus particulièrement visible sur la figure 5, le récipient **2** est spécialement conçu pour éviter à la fois que l'éventuelle bavure **22** ne fasse saillie du plan **9** de pose, et que cette bavure **22** n'affecte la fonction mécanique du fond **6**, et en particulier de la voûte **10**.

A cet effet, l'assise **8** est munie d'une marche **26** formée en creux vers l'intérieur du récipient **2**, à la jonction entre le plan **9** de pose et la voûte **10**. Cette marche **26** présente une section **27** externe, qui s'étend axialement, sensiblement perpendiculairement au plan **9** de pose, et une section **28** interne, qui s'étend transversalement (ou radialement) à partir d'un bord supérieur de la section **27** externe, intérieurement en direction de l'axe X, jusqu'à un bord inférieur de la section **25** périphérique de la voûte **10**.

L'empreinte de la marche **26** est formée dans la paroi **12**, et plus précisément sur le rebord **23**, autour de l'ouverture **17**.

A cet effet, et comme cela est visible sur les figures 3 et **4**, le rebord **23** se termine, vers l'intérieur, par une nervure **29** annulaire constituant l'empreinte de la marche **26** et qui borde l'ouverture **17** en s'étendant axialement en saillie vers l'intérieur de la cavité **16**. Cette nervure **29**, qui délimite intérieurement le rebord **23**, présente en l'espèce un contour sensiblement carré, complémentaire de la marche **26**, et possède une face **30** supérieure constituant l'empreinte de la section **28** interne de la marche **26**, qui s'étend dans un plan perpendiculaire à l'axe X. En position haute du fond **14** de moule, le bord **20** externe de la surface **15** supérieure s'étend au droit de la face **30** supérieure, de façon à correctement compléter l'empreinte du fond **6** du récipient 2.

Comme on le voit sur la figure 4, le moule **11** est dimensionné pour que le plan **21** de joint s'étende au droit de la section **28** interne de la marche **26**. De la sorte, l'éventuelle bavure **22** est formée en saillie axiale vers l'extérieur du récipient **2** à partir de la section **28** interne, comme illustré sur le détail d'encart de la figure 5. Ainsi décalée à la fois radialement et axialement vers l'intérieur du récipient **2** par rapport au plan 9 de pose, la bavure **22** n'affecte nullement la stabilité du récipient **2**. De même, la bavure **22** ainsi renfoncée dans la marche **26** est peu perceptible, tant visuellement qu'au toucher, par l'utilisateur.

La section **27** externe de la marche **26** présente de préférence une hauteur, mesurée axialement, faible par rapport à la hauteur de la voûte **10**. De manière correspondante, la nervure **29** présente une hauteur faible par rapport à la hauteur de la surface **15** supérieure de la voûte **10**. Selon un mode de réalisation préféré, la hauteur de la marche **26** (c'est-à-dire la hauteur de la nervure **29**, ou encore la hauteur de la section **27** externe) est inférieure ou égale à 1 mm environ, et par exemple d'environ 0,5 mm.

De même, la section **28** interne de la marche **26** présente de préférence une largeur, mesurée radialement, faible par rapport à la largeur - également mesurée radialement - du plan **9** de pose (ou de l'assise **8**). De manière correspondante, la nervure **29** présente une épaisseur faible par rapport à la largeur du rebord **23**. Selon un mode de réalisation préféré, la largeur de la marche **26** (c'est-à-dire la largeur de la section **28** interne), est inférieure ou égale à environ la moitié de la largeur du plan **9** de pose. L'épaisseur de la nervure **29**, égale à celle de la marche **26** à l'épaisseur du plan **21** de joint près, est également inférieure ou égale à la moitié environ de la largeur du rebord **23**. Dans certains cas, ce rapport est inférieur encore, notamment dans le cas de récipients de capacité moyenne ou importante, pour lesquels ce rapport peut être inférieur à 1/3, voire à 1/5. Selon un mode de réalisation préféré, la largeur de la marche **26** (c'est-à-dire l'épaisseur de la nervure **29**) est inférieure ou égale à 1 mm environ, et par exemple d'environ 0,5 mm.

Ces dimensions permettent de former une marche **26** à la fois suffisamment large et profonde pour accueillir la bavure **22** tout en évitant que celle-ci ne dépasse du plan **9** de pose, et suffisamment petite pour ne pas affecter la soufflabilité du récipient **2** (c'est-à-dire la capacité de la matière à correctement épouser la forme du moule **11**) tout en étant relativement imperceptible pour l'utilisateur.

Il résulte en premier lieu, en raison du déport du plan **21** de joint vers l'axe X, une meilleure stabilité du récipient **2**, due à l'absence de bavure sur le plan **9** de pose. Dans l'hypothèse où une bavure **22** existerait, elle serait encaissée dans la marche **26** et, par conséquent, décalée à la fois axialement et radialement du plan **9** de pose vers l'intérieur du récipient **2**.

Il résulte en deuxième lieu, de la présence de la marche **26**, une bonne stabilité du fond **6**, et en particulier de la voûte **10**, dont l'empreinte est intégralement formée par la surface **15** supérieure du fond **6** de moule et dont la matière se répartit ainsi sans être affectée par un éventuel fluage dans le plan **21** de joint.

Il résulte en troisième lieu, en raison des faibles dimensions de la marche **26** (et donc de la nervure **29**), une bonne soufflabilité du récipient **2**, qui n'est ainsi pas affectée par le déport du plan **21** de joint.

La fabrication d'un récipient **2** à partir d'une ébauche **3** peut être réalisée comme suit.

On commence par introduire l'ébauche **3** préchauffée dans le moule **11** ouvert. Le fond **14** de moule est alors en position basse. Le moule **11** est refermé puis la tige d'étirage est déplacée en direction du fond **14** de moule jusqu'à venir y plaquer la matière de la préforme **3** ainsi étirée, cependant qu'un fluide (typiquement de l'air) sous une pression de présoufflage (de l'ordre de 5 à 7 bars) est injecté dans la préforme **3**.

Lorsque la tige atteint le fond **14** de moule en y plaquant la matière, le fond **14** de moule se trouve toujours dans sa position basse. La pression de présoufflage n'est pas suffisante pour plaquer la matière intimement contre la paroi **12** du moule **11** ; il est nécessaire pour cela d'injecter dans le récipient **2** en formation un fluide (typiquement de l'air) à une pression de soufflage supérieure à la pression de présoufflage (en pratique la pression de soufflage est de l'ordre de 20 à 30 bars).

La remontée du fond **14** de moule est de préférence initiée pendant l'opération de soufflage, de manière à conférer à la matière du fond **6** un étirage supplémentaire favorable à l'orientation des molécules et à la prise d'empreinte de la matière sur la surface **15** supérieure du fond **14** de moule et sur le rebord **23**, y compris la nervure **29**.

Lors de la remontée du fond **14** de moule, il se peut qu'une (relativement faible) quantité de matière se trouve pincée dans le plan **21** de joint. Comme nous l'avons vu, cette matière, qui forme une bavure **22**, demeure localisée sur la section **28** interne de la marche et, sur le récipient **2** final, ne dépasse pas du plan **9** de pose.

La tige d'étirage, maintenue en contact (via la matière du fond **6** du récipient **2**) contre le fond **14** de moule pendant la remontée de celui-ci, est ensuite retirée, l'intérieur du récipient **2** est mis à l'air libre, et le récipient **2** est évacué avant que le cycle ne soit répété pour le récipient suivant.

## Revendications

1. Moule (**11**) pour la fabrication, à partir d'une ébauche (**3**), d'un récipient (**2**) ayant un corps (**4**) et un fond (**6**) dans le prolongement du corps (**4**) à une extrémité inférieure du corps (**4**), le fond (**6**) comprenant :
- une assise (**8**) périphérique annulaire définissant un plan (**9**) de pose qui s'étend sensiblement perpendiculairement au corps (**4**) à partir d'une extrémité inférieure du corps (**4**), le plan (**9**) de pose étant délimité intérieurement par un bord (**24**) interne ;
- une voûte (**10**) qui s'étend en creux vers l'intérieur du récipient (**2**) à partir de l'assise (**8**),
ce moule (**11**) comprenant :
- une paroi (**12**) ayant une surface (**13**) interne constituant l'empreinte du corps (**4**) du récipient (**2**) et délimitant une cavité (**16**), cette paroi (**12**) étant percée, à une extrémité inférieure, d'une ouverture (**17**) ;
- un fond (**14**) de moule présentant une surface (**15**) supérieure constituant l'empreinte d'au moins la voûte (**10**), et une jupe (**19**) qui s'étend axialement à partir de la surface (**15**) supérieure en regard de l'ouverture (**17**), le fond (**14**) de moule étant monté mobile par rapport à la paroi (**12**) entre une position sortie, dans laquelle la surface (**15**) supérieure est écartée de l'ouverture (**17**) vers l'extérieur de la cavité (**16**), et une position rentrée dans laquelle la surface (**15**) supérieure obture la cavité (**16**) ;
- la paroi (**12**) présente un rebord (**23**) constituant l'empreinte du plan (**9**) de pose, qui s'étend dans le prolongement de la surface (**13**) interne, sensiblement perpendiculairement à celle-ci ;
ce moule (**11**) étant **caractérisé en ce que** le rebord (**23**) se termine, vers l'intérieur, par une nervure (**29**) annulaire bordant l'ouverture et formée en saillie vers l'intérieur de la cavité (**16**).

2. Moule (**11**) selon la revendication 1, **caractérisé en ce que** la surface (**15**) supérieure du fond (**14**) de moule présente, à sa jonction avec la jupe (**19**), un bord (**20**) externe qui, en position rentrée du fond (**14**) de moule, s'étend au droit d'une face (**30**) supérieure de la nervure (**29**).

3. Moule (**11**) selon la revendication 1 ou la revendication 2, **caractérisé en ce que** la nervure (**29**) présente une épaisseur, mesurée radialement, inférieure ou égale à la moitié d'une largeur du rebord (**23**).

4. Moule (**11**) selon la revendication 1 ou la revendication 2, **caractérisé en ce que** la nervure (**29**) présente une épaisseur, mesurée radialement, inférieure ou égale au tiers d'une largeur du rebord (**23**).

5. Moule (**11**) selon la revendication 1 ou la revendication 2, **caractérisé en ce que** la nervure (**29**) présente une épaisseur, mesurée radialement, inférieure ou égale au cinquième d'une largeur du rebord (**23**).

6. Moule (**11**) selon l'une des revendications 1 à 5, **caractérisé en ce que** la nervure (**29**) présente une épaisseur inférieure ou égale à 1 mm environ.

7. Moule (**11**) selon la revendication 6, **caractérisé en ce que** la nervure (**29**) présente une épaisseur d'environ 0,5 mm.

8. Moule (**11**) selon l'une des revendications 1 à 7, **caractérisé en ce que** la nervure (**29**) présente une hauteur, mesurée axialement, inférieure ou égale à 1 mm.

9. Moule (**11**) selon la revendication 8, **caractérisé en ce que** la nervure (**29**) présente une hauteur d'environ 0,5 mm.

10. Procédé de fabrication d'un récipient (**2**) à partir d'une ébauche (**3**), ce procédé comprenant les opérations consistant à :
- introduire l'ébauche (**3**) dans un moule selon l'une des revendications précédentes, le fond (**14**) de moule étant en position sortie,
- souffler le récipient (**2**) en injectant dans l'ébauche un gaz sous pression,
- au cours du soufflage, déplacer le fond (**14**) de moule vers sa position rentrée.

## Patentansprüche

1. Formwerkzeug (11) zur Herstellung eines Behälters (2), der einen Körper (4) und in der Verlängerung des Körpers (4) an einem unteren Ende des Körpers (4) einen Boden (6) aufweist, aus einem Rohling (3), wobei der Boden (6) Folgendes umfasst:
- eine äußere, ringförmige Basis (8), die eine Standfläche (9) definiert, die sich im Wesentlichen von einem unteren Ende des Körpers (4) senkrecht zum Körper (4) erstreckt, wobei die Standfläche (9) innen durch eine innere Kante (24) begrenzt ist;
- eine Wölbung (10), die sich von der Basis (8) quer zum Innenraum des Behälters (2) erstreckt,
wobei dieses Formwerkzeug (11) Folgendes umfasst:
- eine Wand (12), die eine Innenfläche (13) aufweist, die die Vertiefung für den Körper (4) des Behälters (2) bildet und einen Hohlraum (16) begrenzt, wobei die Wand (12) an einem unteren Ende von einer Öffnung (17) durchbohrt ist;
- einen Boden (14) des Formwerkzeugs, der eine Oberfläche (15) aufweist, die die Vertiefung mindestens für die Wölbung (10) und eine Schürze (19), die sich von der Oberfläche (15) in Bezug zur Öffnung (17) axial erstreckt, bildet, wobei der Boden (14) des Formwerkzeugs in Bezug auf die Wand (12) zwischen einer ausgezogenen Position, in der die Oberfläche (15) von der Öffnung (17) in Richtung des Außenraums des Hohlraums (16) beabstandet ist, und einer eingezogenen Position, in der die Oberfläche (15) den Hohlraum (16) verschließt, beweglich befestigt ist;
- wobei die Wand (12) einen Rand (23) aufweist, der die Vertiefung für die Standfläche (9) bildet, der sich in der Verlängerung der Innenfläche (13) im Wesentlichen senkrecht zu dieser erstreckt;
wobei das Formwerkzeug (11) **dadurch gekennzeichnet ist, dass** der Rand (23) zum Innenraum in einer ringförmigen Rippe (29) endet, die an die Öffnung angrenzt und zum Innenraum des Hohlraums (16) hin vorspringend gebildet ist.

2. Formwerkzeug (11) nach Anspruch 1, **dadurch gekennzeichnet, dass** die Oberfläche (15) des Bodens (14) des Formwerkzeugs am Übergang zu der Schürze (19) eine äußere Kante (20) aufweist, die sich in der eingezogenen Position des Bodens (14) rechts von einer Oberfläche (30) der Rippe (29) erstreckt.

3. Formwerkzeug (11) nach Anspruch 1 oder Anspruch 2, **dadurch gekennzeichnet, dass** die Rippe (29) eine Dicke aufweist, die radial gemessen kleiner oder gleich der Hälfte der Breite des Randes (23) ist.

4. Formwerkzeug (11) nach Anspruch 1 oder Anspruch 2, **dadurch gekennzeichnet, dass** die Rippe (29) eine Dicke aufweist, die radial gemessen kleiner oder gleich einem Drittel der Breite des Randes (23) ist.

5. Formwerkzeug (11) nach Anspruch 1 oder Anspruch 2, **dadurch gekennzeichnet, dass** die Rippe (29) eine Dicke aufweist, die radial gemessen kleiner oder gleich einem Fünftel der Breite des Randes (23) ist.

6. Formwerkzeug (11) nach einem der Ansprüche 1 bis 5, **dadurch gekennzeichnet, dass** die Rippe (29) eine Dicke aufweist, die kleiner oder gleich etwa 1 mm ist.

7. Formwerkzeug (11) nach Anspruch 6, **dadurch gekennzeichnet, dass** die Rippe (29) eine Dicke von etwa 0,5 mm aufweist.

8. Formwerkzeug (11) nach einem der Ansprüche 1 bis 7, **dadurch gekennzeichnet, dass** die Rippe (29) eine Höhe aufweist, die axial gemessen kleiner oder gleich 1 mm ist.

9. Formwerkzeug (11) nach Anspruch 8, **dadurch gekennzeichnet, dass** die Rippe (29) eine Höhe von etwa 0,5 mm aufweist.

10. Herstellungsverfahren für einen Behälter (2) aus einem Rohling (3), wobei das Verfahren die folgenden Schritte umfasst:
- Einbringen des Rohlings (3) in ein Formwerkzeug nach einem der vorhergehenden Ansprüche, wobei sich der Boden (14) des Formwerkzeugs in der ausgezogenen Position befindet,
- Blasen des Behälters (2) durch Einbringen eines druckbeaufschlagten Gases in den Rohling,
- während des Blasens Verschieben des Bodens (14) des Formwerkzeugs in seine eingezogene Position.

## Claims

1. Mould (11) for the manufacture, from a parasin (3), of a container (2) having a body (4) and a bottom (6) in the continuation of the body (4) at a lower end of the body (4), the bottom (6) comprising:
- an annular peripheral seating (8) defining a setting-down plane (9) which extends substantially perpendicular to the body (4) from a lower end of the body (4), the setting-down plane (9) being internally delimited by an internal edge (24);
- an arch (10) which extends as a hollow towards the inside of the container (2) starting from the seating(8),
this mould (11) comprising:
- a wall (12) having an internal surface (13) that forms part of the impression of the body (4) of the container (2) and delimiting a cavity (16), this wall (12) being pierced, at a lower end, with an opening (17);
- a mould bottom (14) having an upper surface (15) constituting the impression of at least the arch (10), and a skirt (19) which extends axially from the upper surface (15) facing the opening (17), the mould bottom (14) being mounted with the ability to move with respect to the wall (12) between an out position in which the upper surface (15) is distanced from the opening (17) towards the outside of the cavity (16), and an in position, in which the upper surface (15) closes off the cavity (16);
- the wall (12) has a rib (23) constituting the impression of the setting-down plane (9), which extends in the continuation of the internal surface (13), substantially perpendicular thereto;
this mould (11) being **characterized in that** the rim (23) ends, towards the inside, in an annular rib (29) bordering the opening and formed as a projection towards the inside of the cavity (16).

2. Mould (11) according to Claim 1, **characterized in that** the upper surface (15) of the mould bottom (14) has, where it reaches the skirt (19), an external edge (20) which, when the mould bottom (14) is in the in position, extends in line with an upper face (30) of the rib (29).

3. Mould (11) according to Claim 1 or Claim 2, **characterized in that** the rib (29) has a thickness measured radially, less than or equal to half a width of the rim (23).

4. Mould (11) according to Claim 1 or Claim 2, **characterized in that** the rib (29) has a thickness measured radially, less than or equal to one third of a width of the rim (23).

5. Mould (11) according to Claim 1 or Claim 2, **characterized in that** the rib (29) has a thickness measured radially, less than or equal to one fifth of a width of the rim (23).

6. Mould (11) according to one of Claims 1 to 5, **characterized in that** the rib (29) has a thickness less than or equal to around 1 mm.

7. Mould (11) according to Claim 6, **characterized in that** the rib (29) has a thickness of around 0.5 mm.

8. Mould (11) according to one of Claims 1 to 7, **characterized in that** the rib (29) has a height measured axially, less than or equal to 1 mm.

9. Mould (11) according to Claim 8, **characterized in that** the rib (29) has a height of around 0.5 mm.

10. Method of manufacturing a container (2) from a parasin (3), this method comprising the operations consisting in:
- introducing the parasin (3) into a mould according to one of the preceding claims, the mould bottom (14) being in the out position,
- blowing the container (2) by injecting pressurized gas into the parasin,
- during the blowing, moving the mould bottom (14) towards its in position.
